# EUROPEAN PATENT APPLICATION

(11) **EP 1 605 623 A2**
(43) Date of publication of application: **14.12.2005**
(21) Application number: 04029179.1
(22) Date of filing: 09.12.2004
(51) Int. Cl.: H04L 1/08

(54) **Multiple transmission communications method and device**

(30) Priority: 13.06.2004 US 710019
(71) Applicant: ASUSTeK Computer Inc., Peitou, Taipei City (TW)
(72) Inventor: Jiang, Sam Shiaw-Shiang, Taipei City (TW); Sun, Chung-Ming, Chung-Li City Tao-Yuan Hsien (TW)
(74) Representative: Weber, Joachim

(57) **Abstract**

A first peer (60) successively transmits a predetermined number of more than one identical instances of a data block (90) to a second peer (70). The second peer (70) receives at least two of the predetermined number of identical instances of the data block (90). The second peer (90) combines more than one corrupted received data block (90a-90e) to form a complete instance of the original data block (90).

## Description

The present invention relates to communicating data between transmitting and receiving peers according to the pre-characterizing clauses of claims 1, 13, and 19.

Modern electronic communications systems are widely implemented in devices such as the ubiquitous mobile radio telephone (cell phone). To meet the demands of ongoing improvements in such devices, increased data rates are required for improving transmission of voice and data (e.g. digital pictures). However, with increased data rates comes increased susceptibility to noise. As such, improvements in error correction and compensation in electronic communications systems are readily embraced by the communications industry.

In dedicated channel communications systems, after a message or data block has been transmitted, whether to retransmit the this data block or to transmit the next data block is determined by an indication of a receiving status of the transmitted data block. The indication of receiving status of the data block could be either of the following: (1) a positive or negative acknowledgement reported by the receiver, or (2) a corresponding response of the data block from the receiver when the receiver has received the data block successfully.

However, the state-of-the-art system suffers from several disadvantages. For example, in a noisy communication environment, it is possible for several bits of a transmitted data block to become corrupted. Moreover, a retransmission and a positive or negative acknowledgement may also become corrupted. Thus, in a noisy communication environment, time spent waiting to receive an acknowledgement can be substantially prolonged. Such extended transmission times result in poor performance of communications systems.

This in mind, the present invention aims at providing a method of communicating data between transmitting and receiving peers that allows the receiver to quickly combine erroneous received instances of the block when required.

This is achieved by a method, a transmitting peer, and a receiving peer according to claims 1, 13, and 19. The dependent claims pertain to corresponding further developments and improvements.

As will be seen more clearly from the detailed description following below, the claimed method includes successively transmitting a first predetermined number of more than one identical instances of a data block with a first peer, receiving at least two of the first predetermined number of identical instances of the data block at a second peer, and combining more than one corrupted received data blocks to form a complete instance of the data block at the second peer. Successively transmitting a predetermined number of more than one identical instances of a data block without waiting for indication of a negative acknowledgement or time out allows a data block combining capable receiver to quickly combine several erroneous copies of the transmitted data block to form a complete and correct instance of the transmitted data block. Moreover, transmitting a predetermined number of more than one identical instances of a data block anticipates transmission errors and preempts delay-causing receiver acknowledgement signals, thereby increasing an over all data transmission rate.

In the following, the invention is further illustrated by way of example, taking reference to the accompanying drawings. Thereof
Fig.1 is a schematic diagram of a demand request procedure according to the prior art,
Fig.2 is a schematic diagram of a demand request procedure according to the prior art,
Fig.3 is a timing diagram of data block communication according to the prior art,
Fig.4 is a timing diagram of data block communication according to the prior art,
Fig.5 is a block diagram of a communications system according to the present invention,
Fig.6 is a detailed block diagram of the communications system of Fig.5,
Fig.7 is a timing diagram of data block communication according to the present invention, and
Fig.8 is a timing diagram of data block communication according to the present invention.

In some dedicated channel communications systems, after a message or data block has been transmitted, whether to retransmit the previously transmitted data block or to transmit the next data block is decided by an indication of the receiving status of the previously transmitted data block. The indication of receiving status of the previous data block could be either of the following: (1) a positive or negative acknowledgement reported by the receiver, or (2) a corresponding response of the previous data block from the receiver when the receiver has received the previous data block successfully.

One example of the first kind of indication of receiving status of the previous data block is the stop-and-wait (SAW) hybrid automatic-repeat-request (HARQ) mechanism used in high-speed downlink packet access (HSDPA) systems, such as that specified in the 3GPP TS 25.321 V5.6.0 (2003-9) Medium Access Control (MAC) protocol specification. In this system, a data block is retransmitted when a negative acknowledgement (NACK) of this data block is received. In the HARQ mechanism, if the receiver has received a data block with a cyclic redundancy code (CRC) showing data corruption during transmission, the receiver reports a NACK to the transmitter and saves the corrupted data block in a soft buffer. When the data block is retransmitted by the transmitter and received by the receiver, the receiver combines the newly received data block with the data saved in the soft buffer with proper weighting factors and again checks the CRC. If the CRC shows the combined data block is still corrupted, the procedure is repeated. If the CRC shows the combined data block is correct, the data block is delivered to an upper layer and a positive acknowledgement (ACK) is reported back to the transmitter. When the transmitter receives the ACK status report, it proceeds to transmit the next data block.

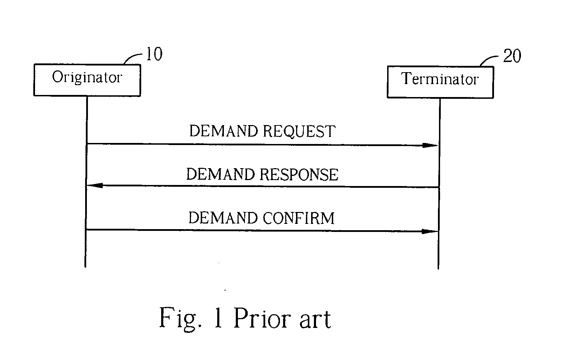

One example of the second kind of indication of receiving status of the previous data block is a demand request procedure, such as RRC connection establishment or cell update procedures specified in the 3GPP TS 25.331 V3.16.0 (2003-9) Radio Resource Control (RRC) protocol specification. Fig.1 illustrates a typical demand request procedure according to the prior art. An originator 10 sends an DEMAND REQUEST message to a terminator 20. If this message is received successfully by the terminator 20 and if the terminator 20 successfully verifies the content of the message, the terminator 20 responds with an DEMAND RESPONSE message to the originator 10. When the originator 10 receives the DEMAND RESPONSE message, it checks the content of the message. Upon verifying the content, the originator 10 sends its second message, an DEMAND CONFIRM message. When the DEMAND CONFIRM message is received by the terminator 20, the demand request procedure ends.

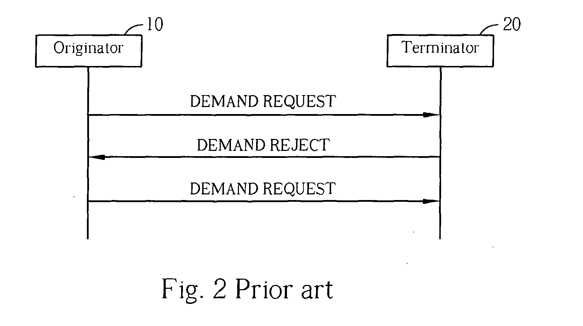

Fig.2 illustrates what happens in the typical demand request procedure when the DEMAND REQUEST message is rejected. If the terminator 20 determines that the content of the DEMAND REQUEST message is unsatisfactory, it returns an DEMAND REJECT message to the originator 10. Upon receiving the DEMAND REJECT message, the demand request procedure ends. The originator 10 may decide to retransmit the DEMAND REQUEST message again later to restart the demand request procedure.

Occasionally, if the transmitted message is lost during transmission, a time-out mechanism can be activated, and the message can be automatically retransmitted when an expected response (such as either the DEMAND RESPONSE message of Fig.1, DEMAND REJECT message of Fig. 2 expected by the originator 10, or the DEMAND CONFIRM message expected by the terminator 20) is not received before a predetermined time expires.

The state-of-the-art system described above suffers from several disadvantages. In a noisy communication environment, it is possible for several bits of a transmitted (or retransmitted) data block to become corrupted. Although the CRC mechanism can usually detect this situation, it cannot automatically correct corrupted bits. In applying the data block combination concept, the SAW HARQ mechanism utilizes time diversity efficiently so that the number of retransmissions can be reduced dramatically. However, the delays of the data block transmission and the status report cause the procedure to take longer than necessary. In the case of a demand request procedure with no HARQ mechanism, the situation is worse. Take Fig.1 as an example. If the DEMAND REQUEST message is corrupted, the terminator 20 cannot know that the originator 10 is waiting for a response, and so nothing is returned. After a time out without receiving any expected responding message, the originator 10 retransmits the DEMAND REQUEST message. In a noisy environment, this retransmission may also become corrupted. Thus, in a noisy communication environment, the duration of the demand request procedure can be substantially prolonged.

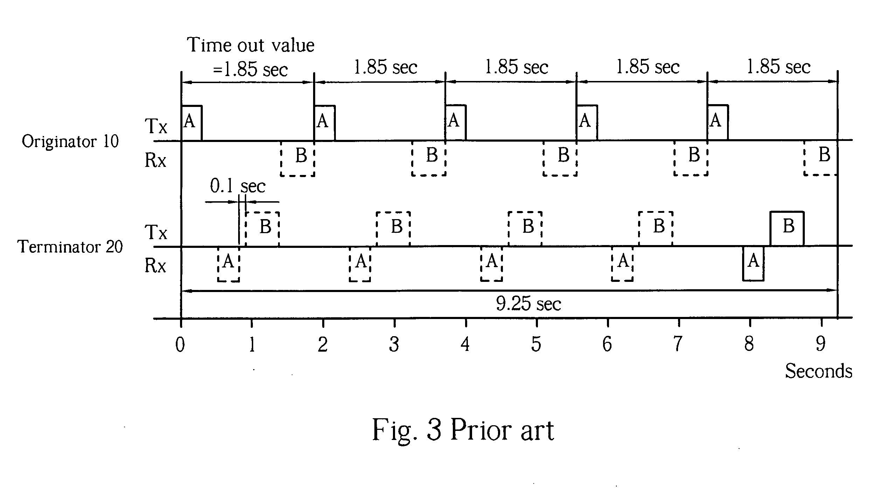

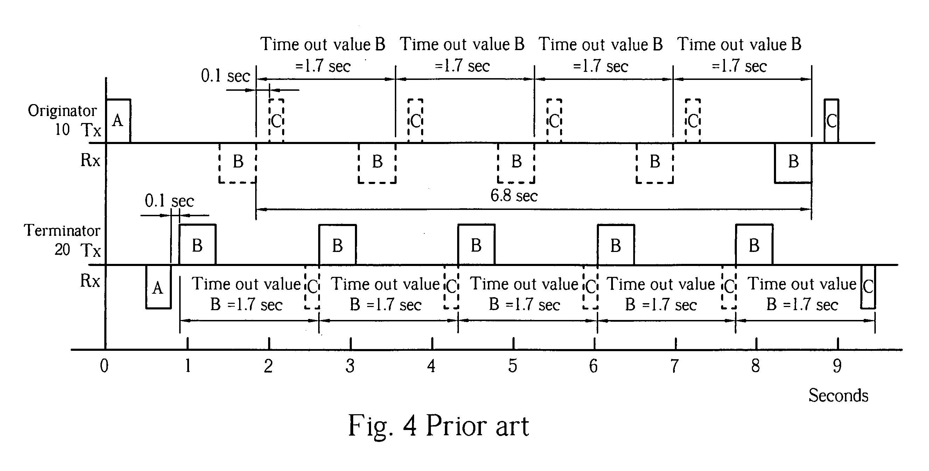

For example, suppose a communication environment is degraded to a degree that originator 10 and terminator 20 require their HARQ systems to combine five copies of the same data block to get a successfully received data block. Fig.3 illustrates a timing diagram of retransmitting the DEMAND REQUEST, called data block A hereafter, and the DEMAND RESPONSE, called data block B hereafter, according to the prior art. The dashed boundaries of blocks on the Tx row in Fig.3 indicate that they are not actually transmitted but are supposed to be transmitted. The dashed boundaries of blocks on the Rx row in Fig.3 indicate that they are not actually received correctly but are supposed to be received with CRC error. These notations are used also in the other timing diagrams hereafter. If the transmission times for data blocks A and B are respectively 0.3 and 0.45 seconds, the one-way transmission delay is 0.5 seconds, and the processing time for data block A is 0.1 second, then the appropriate time out value for retransmission of data block A should be around 0.3+0.5+0.1+0.45+0.5 = 1.85 seconds. Thus, five retransmission cycles take about 1.85*5 = 9.25 seconds. Therefore, in this particularly degraded communications environment, it takes the originator 10 about 9.25 seconds to get the first transmitted copy of data block B. Fig.4 illustrates the timing diagram of retransmitting data block B. If the transmission time for the DEMAND CONFIRM, called data block C hereafter, is 0.15 seconds and the processing time for data block B is 0.1 seconds, then the appropriate time out value of retransmission of data block B is around 0.45+0.5+0.1+0.15+0.5 = 1.7 seconds. The originator 10 needs another four retransmission cycles of data block B (1.7*4=6.8 seconds) to receive data block B successfully. Therefore, it takes at least 9.25+6.8 = 16.05 seconds in total to complete the exchange of data blocks A and B between the originator 10 and terminator 20.

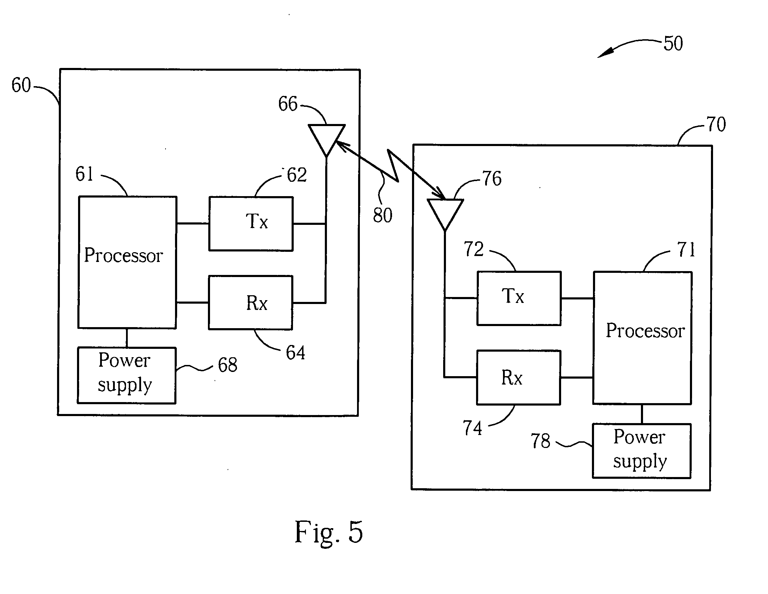

Please refer to Fig.5 illustrating a communications system 50 according to the present invention. The system 50 includes two peers 60, 70, which are communications devices such as mobile telephones, base stations or the like. Peers 60 and 70 could be both mobile telephones. The peer 60 includes a processor 61 connected to both a transmitter 62 and a receiver 64. The transmitter 62 and receiver 64 are connected to an antenna 66. Further provided is a power supply (such as a battery or power outlet line) 68 for supplying electrical power to all components requiring it. The antenna 66 can be shared by the transmitter 62 and receiver 64 as shown, or alternatively, two separate antennas can be provided. The processor 61 controls all operations of the peer 60, such as forwarding data to be transmitted to the transmitter 62 and processing data received at the receiver 64. The receiver 64 is capable of combining more than one corrupted received data block to form a complete instance of the data block. Similarly, the peer 70 includes a processor 71, a transmitter 72, a receiver 74, an antenna 76, and a power supply 78. The peers 60, 70 communicate over a channel 80 such as a dedicated EM band (radio, microwave, etc) or a communication link over mobile network.

According to the present invention method, the processors 61, 71 control the transmitters 62, 72 to successively transmit a predetermined number of identical instances of each data block to be sent. For simplicity, assume that the peer 60 is transmitting and the peer 70 is receiving. Rather than sending a given data block only once, the processor 61 controls the transmitter 62 to send the data block several times without waiting for indication of a negative acknowledgement or time out. Thus, suitable delays between successive transmissions range from substantially no delay to roughly the expected duration for acknowledgement. At the receiving peer 70, the receiver 74 is capable of merging several corrupted blocks to properly reconstruct the sent data block. Since the main purpose in sending the same data block successively is to counter the effects of a noisy transmission environment, the predetermined number can be selected according to expected noise levels.

General operation of the present invention communications system 50 is as follows, again assuming that the peer 60 is transmitting and the peer 70 is receiving. The processor 61 of the peer 60 determines a data block to be sent to the peer 70. Such a data block can be of a group of user data such as segments of digital pictures or a group of signaling messages such as demand request message or demand response message to be communicated from the peer 60 to the peer 70. The processor 61 controls the transmitter 62 to successively transmit the data block a number of times. In other words, rather than remaining idle while waiting for an expected response or a status report from the peer 70, the peer 60 retransmits the data block one or more times. The receiver 74 of the peer 70 receives some quantity of the transmitted copies of the data block with varying degrees of accuracy. In an ideal transmitting environment, the receiver 74 would receive all instances of the data block correctly. While in a noisy environment, the receiver 74 may only receive erroneous (e.g. indicated by CRC) instances of the data block. During reception of instances of the data block, the receiver 74 reconstructs the original data block via a proper data combining mechanism until the CRC indicates that there is no data corruption in the combined data block. If the receiver 74 receives a correct instance of the data block, no data combination is needed and the receiver 74 simply neglects the other copies of the data block. Naturally, the peer 70 can transmit to the peer 60 in the same manner.

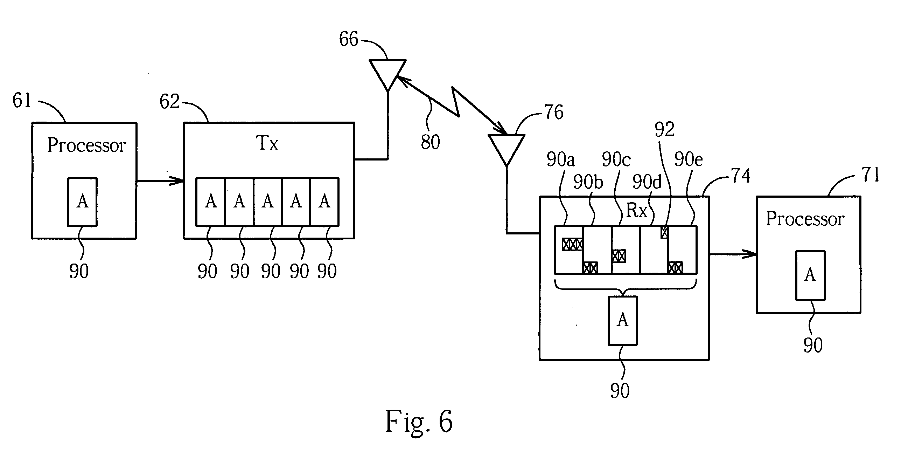

Referring to Fig.6 together with Fig. 5, the communications system 50 is shown operating to transmit a data block 90. The processor 61 of the peer 60 forwards a number of (e.g. five) instances of the data block 90 to the transmitter 62, which then transmits all five instances over the path 80 via the antenna 66. The antenna 76 and receiver 74 of the peer 70 receive this transmission as illustrated by the data blocks 90a-90e. The data blocks 90a-90e have varying erroneous bits 92, such that the receiver 74 must combine at least two of the data blocks 90a-90e to reconstruct the original data block 90 successfully. In actual application, one of the data blocks 90a-90e may be entirely correctly received, with such combination by the receiver 74 being unnecessary. Once the receiver 74 performs any required block combination, it forwards the correct data block 90 to the processor 71. Only if the receiver 74 could not combine the data blocks 90a-90e to form the complete data block 90 would the receiver 74 indicate to the processor 71 that the data block 90 was not received correctly. As a result, the present invention method can ensure that the data block 90 is quickly and correctly transmitted.

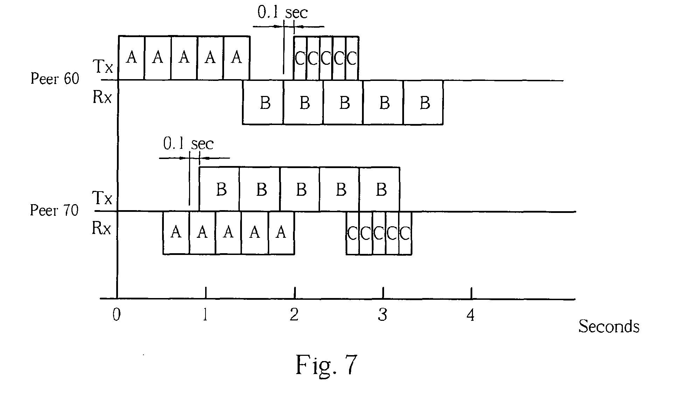

Please refer to Fig. 7 illustrating an example of the above method. In Fig.7, the transmission times for data blocks A, B, and C are respectively 0.3 seconds, 0.45 seconds, and 0.15 seconds. The one-way transmission delay is 0.5 seconds. Both the processing times for data blocks A and B are 0.1 second. The peer 60 sends five copies of data block A, and the peer 70 receives the first copy of the data block A successfully. After the processing time of 0.1 second for data block A, the peer 70 responds with five copies of data block B. The peer 60 receives the first copy of data block B successfully. Then, after the processing time of 0.1 second for data block B, the peer 60 sends five copies of data block C. Note that in the example shown in Fig.7, the communications system 50 operates in an ideal communications environment, and as such, the advantage of the present invention method is not apparent. Regardless, one can see that there are no penalties induced by the present invention method under the circumstances that the channel resources are reserved for peers 60 and 70.

In the example illustrated by Fig.7, peer 70 may choose to stop transmission of the fifth instance of data block B if the first receiving instance of data block C is error free. In general, a peer can interrupt the predetermined number of transmission instances of a data block while an expected response is correctly received. The expected response could be a positive acknowledgment of the data block or any possible responding message of the data block.

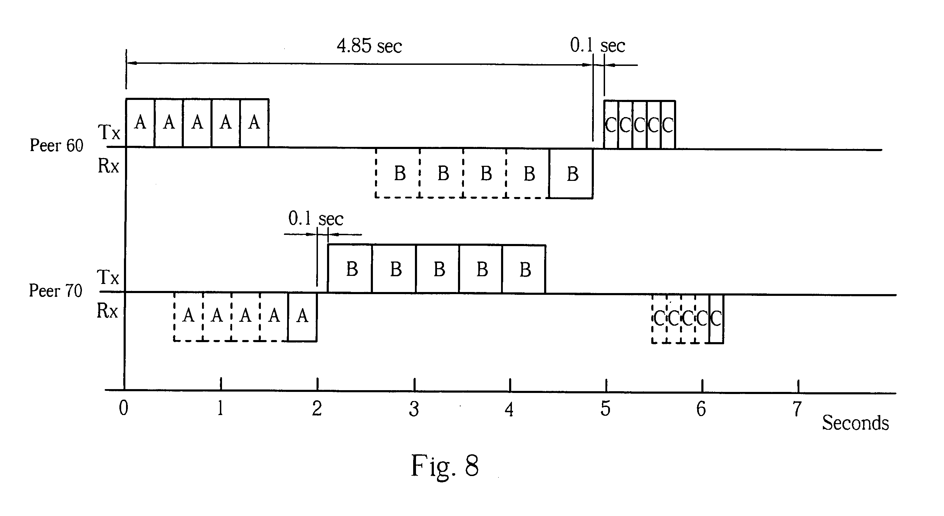

In the communication environment that is degraded to the degree that the terminator 20 requires five copies of the same data block to combine into an error-free data block, the timing diagram of the present invention is illustrated in Fig.8. Compared with the prior art example illustrated in Fig.4, in the present invention example as illustrated in Fig.8, peer 70 receives five copies of data block A in 0.3*5+0.5 = 2 seconds. Then, peer 60 receives five copies of data block B in 0.1+0.45*5+0.5 = 2.85 seconds. Thus, with the present invention method, it takes only 2+2.85=4.85 seconds to complete the exchange of data blocks A and B instead of 9.25+6.8 = 16.05 seconds by the prior art (Figs. 3 and 4).

One can choose any appropriate combination method to combine the received copies of the data blocks. Combining received instances in a soft buffer, i.e. combining them before bit quantization, as done in HSDPA systems described previously, is one way although the memory size requirement is heavy. Other alternatives are to perform a majority vote or a rounded arithmetic average for each bit of the data block, thereby eliminating the need for a soft buffer to store the data before bit quantization.

In contrast to the prior art, the present invention successively transmits a given data block several times without waiting for indication of a negative acknowledgement or time out. This allows a data block combining capable receiver to quickly combine several erroneous copies of the transmitted data block to form a complete and correct instance of the transmitted data block. That is, the present invention method anticipates transmission errors and preempts delay-causing receiver acknowledgement signals. As a result, the present invention utilizes the resources of a dedicated channel to maximum extent.

## Claims

1. A method of communicating data comprising:
providing a first peer (60) and a second peer (70);
**characterized by:**
successively transmitting a first predetermined number of more than one identical instances of a data block (90) with a first transmitter (62) of the first peer (60);
receiving at least two of the first predetermined number of identical instances of the data block (90) with a second receiver (74) of the second peer (70); and
combining more than one corrupted received data blocks (90a-90e) to form a complete instance of the data block (90) at the second peer (70).

2. The method of claim 1 wherein combining more than one corrupted received data blocks (90a-90e) to form a complete instance of the data block (90) at the second peer (70) is further **characterized by**:
transmitting a response to the complete instance of the data block (90) with a second transmitter (72) of the second peer (70).

3. The method of claim 2 further **characterized by**:
successively transmitting a second predetermined number of more than one identical instances of the response with the second transmitter (72) of the second peer (70).

4. The method of claim 3 **characterized in that** the second predetermined number is an odd number.

5. The method of claim 1 wherein successively transmitting a first predetermined number of more than one identical instances of a data block (90) with a first transmitter (62) of the first peer (60) is further **characterized by**::
correctly receiving an expected response of the data block (90) with a first receiver (64) of the first peer (60); and
disabling the successive transmission of the data block (90) of the first transmitter (62) of the first peer (60).

6. The method of claim 5 **characterized in that** the expected response is a positive acknowledgment of the data block (90) .

7. The method of claim 5 **characterized in that** the expected response is in a group of possible responding messages of the data block (90).

8. The method of claim 1 **characterized in that** said successive transmitting and said receiving are performed over a dedicated channel (80) shared only by the first and second peers (60, 70).

9. The method of claim 1 wherein combining more than one corrupted received data blocks (90a-90e) is **characterized by** taking a rounded arithmetic average for each bit of these received data blocks (90a-90e).

10. The method of claim 1 **characterized in that** the number of combined corrupted received data blocks (90a-90e) is an odd number.

11. The method of claim 10 wherein combining more than one corrupted received data blocks (90a-90e) is **characterized by** performing a majority vote for each bit among these received data blocks (90a-90e).

12. The method of claim 1 **characterized in that** the first predetermined number is an odd number.

13. A transmitting peer (60) of a communications system (50) comprising:
a first antenna (66) coupled to a second antenna (76) of a receiving peer (70) via a transmission medium;
a first transmitter (62) electrically connected to the first antenna (66) for transmitting data blocks (90);
a first receiver (64) electrically connected to the first antenna (66) for receiving a response from the receiving peer (70);
a first power supply (68) electrically connected to the first transmitter (62); and
**characterized by**:
a first processor (61) electrically connected to the first power supply (68) and the first transmitter (62) for controlling the first transmitter (62) to successively transmit a first predetermined number of more than one identical instances of a data block (90) via the first antenna (66); wherein the first processor (61) is capable of detecting an expected response of the data block (90) at the first receiver (64), and accordingly disabling the successive transmission of identical instances of the data block (90) at the first transmitter (62).

14. The transmitting peer (60) of claim 13 **characterized in that** the first antenna (66) comprises two sets of antenna units, one electrically connected to the first transmitter (62) and the other electrically connected to the first receiver (64).

15. The transmitting peer (60) of claim 13 **characterized in that** the expected response is a positive acknowledgment of the data block (90).

16. The transmitting peer (60) of claim 13 **characterized in that** the expected response is in a group of possible responding messages of the data block (90).

17. The transmitting peer (60) of claim 13 **characterized in that** the transmission medium is a dedicated channel of electromagnetic waves (80).

18. The transmitting peer (60) of claim 13 **characterized in that** the first predetermined number is an odd number.

19. A receiving peer (70) of a communications system (50) comprising:
a second antenna (76) coupled to a first antenna (66) of a transmitting peer (60) via a transmission medium;
a second receiver (74) electrically connected to the second antenna (76) for receiving data blocks (90);
a second power supply (78) electrically connected to the second receiver (74); and
**characterized by**:
a second processor (71) electrically connected to the second power supply (78) and the second receiver (74) for combining more than one data blocks (90) received successively to form a complete instance of the data block (90).

20. The receiving peer (70) of claim 19 **characterized in that** the transmission medium is a dedicated channel of electromagnetic waves (80).

21. The receiving peer (70) of claim 19 **characterized in that** the second processor (71) is capable of taking a rounded arithmetic average for each bit of received data blocks (90) when combining more than one corrupted received data blocks (90a-90e).

22. The receiving peer (70) of claim 19 **characterized in that** the number of combined corrupted received data blocks (90a-90e) is an odd number.

23. The receiving peer (70) of claim 22 **characterized in that** the second processor (71) is capable of performing a majority vote for each bit among the received data blocks (90) when combining more than one corrupted received data blocks (90a-90e).

24. The receiving peer (70) of claim 19 wherein the second processor (71) is further **characterized by** a second transmitter (72) for transmitting a response to the transmitting peer (60).

25. The receiving peer (70) of claim 24 **characterized in that** the second transmitter (72) is capable of successively transmitting a second predetermined number of more than one identical instances of the response.

26. The receiving peer (70) of claim 25 **characterized in that** the second predetermined number is an odd number.
